(19) Europäisches Patentamt
European Patent Office
Office européen des brevets

(11) **EP 3 425 198 A1**

(12) **EUROPEAN PATENT APPLICATION**
published in accordance with Art. 153(4) EPC

(43) Date of publication:
**09.01.2019 Bulletin 2019/02**

(51) Int Cl.:
***F03D 7/04*** *(2006.01)*

(21) Application number: **16892502.2**

(86) International application number:
**PCT/JP2016/056258**

(22) Date of filing: **01.03.2016**

(87) International publication number:
**WO 2017/149657 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• **ANDO, Toshiyuki**
**Tokyo 100-8310 (JP)**

• **HARAGUCHI, Eisuke**
**Tokyo 100-8310 (JP)**
• **SUZUKI, Jiro**
**Tokyo 100-8310 (JP)**
• **ONO, Hitomi**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **WIND TURBINE START ASSIST DEVICE**

(57)     There are provided: a blade rotation speed calculator (11) to calculate a blade rotation speed of blades (903) of a wind turbine (900), the blades crossing laser light emitted by a wind measurement lidar device (200) installed on a wind turbine nacelle of the wind turbine; a coming wind velocity calculator (12) to calculate a coming wind velocity on a basis of a wind velocity in line-of-sight direction of the laser light (5a, 5b), the wind velocity being obtained from the wind measurement lidar device (200); and a start assist controller (14) to control a start assist for starting rotation of the blades (903) on a basis of the blade rotation speed calculated by the blade rotation speed calculator (11) and the coming wind velocity calculated by the coming wind velocity calculator (12).

FIG. 2

EP 3 425 198 A1

**Description**

TECHNICAL FIELD

The present invention relates to a wind turbine start assist device for starting rotation of blades in a wind power generation device.

BACKGROUND ART

In the related art, in order to enhance the operation rate of wind power generation, wind power generation devices are desired to have structure that facilitates a start even under a wind velocity condition of a gentle wind.
For example, Patent Literature 1 below discloses a technique related to a start assist control device for facilitating rotation start of a wind turbine in a gentle wind.
In Patent Literature 1, the number of rotations of a rotor is obtained from a rotor sensor that detects the rotation of the rotor in a generator of a wind turbine. When the wind turbine is not rotating and the wind turbine is stopped even after this stopped state of the wind turbine has continued for a predetermined period of time, a power supply system for a start assist is turned on.
When the wind turbine rotates at the number of rotations larger than or equal to a predetermined number by wind power, the power supply system for start assist is turned off. In Patent Literature 1, the wind power is introduced as a control element in addition to the number of rotations of the rotor. When the wind turbine is not rotating and the wind velocity is greater than or equal to a start wind velocity of the wind turbine, the power supply system for the start assist is turned on.

CITATION LIST

Patent Literature 1: JP 2004-285 991 A

SUMMARY OF INVENTION

However, the technique disclosed in Patent Literature 1 may cause a problem that a large amount of electric power is required for the assist because the start assist is initiated when the wind turbine is not rotating. In addition, there may be problems that, when only the wind velocity in the vicinity of the wind turbine can be measured and, in particular, when a coming wind velocity is zero at the time of an assist, the start assist fails and a power loss increases.
The present invention has been devised to solve the foregoing problems, and an object of the invention is to provide a wind turbine start assist device capable of enhancing efficiency in a start of a wind turbine and improving effective power generation.
A wind turbine start assist device according to the present invention includes: a blade rotation speed calculator to calculate a blade rotation speed of blades of a wind turbine, the blades crossing laser light emitted by a wind measurement lidar device installed on a wind turbine nacelle of the wind turbine; a coming wind velocity calculator to calculate a coming wind velocity on a basis of a wind velocity in line-of-sight direction of the laser light, the wind velocity being obtained from the wind measurement lidar device; and a start assist controller to control a start assist for starting rotation of the blades on a basis of the blade rotation speed calculated by the blade rotation speed calculator and the coming wind velocity calculated by the coming wind velocity calculator.
According to the wind turbine start assist device of the present invention, the efficiency in the start of the wind turbine is enhanced and the effective power generation is improved.

BRIEF DESCRIPTION OF DRAWINGS

| FIG. 1 | is a diagram explaining a schematic structure of a wind power generation device in which a start assist control is performed by a wind turbine start assist device according to Embodiment 1 of the present invention. |
| FIG. 2 | is a diagram explaining a structure of the wind turbine start assist device according to the Embodiment 1 of the present invention. |
| FIG. 3 | is a flowchart for explaining the operation of the wind turbine start assist device according to the Embodiment 1 of the present invention. |
| FIG. 4 | is a flowchart for explaining a detection process of the blade rotation speed and the coming wind |

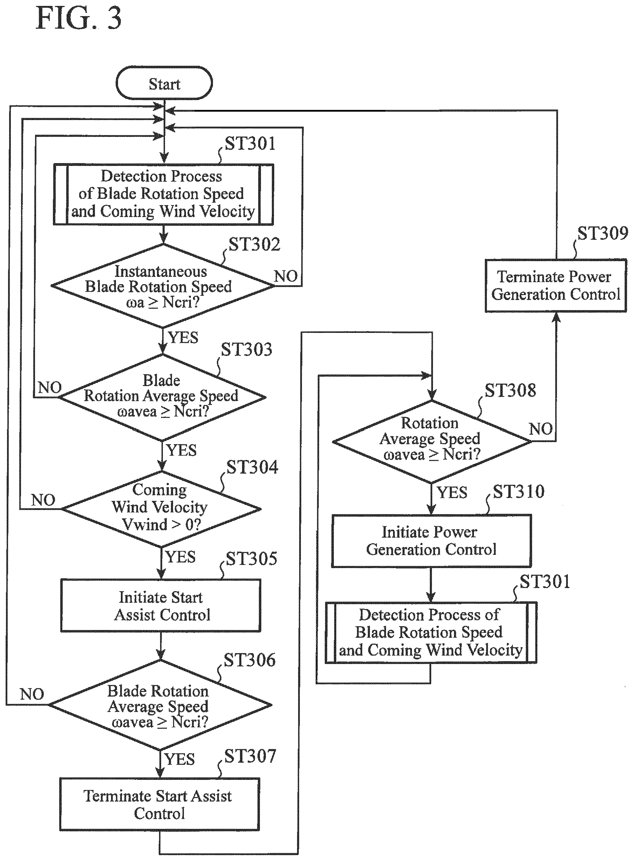

velocity in step ST301 of FIG. 3 in detail.

FIGS. 5A and 5B    are diagrams for explaining the positional relationship between the laser emission direction of a wind measurement lidar device and blades in blade crossing determination, blade rotation speed detection, and coming wind velocity detection of the present invention.

FIGS. 6A and 6B    are diagrams illustrating the relationship between blade rotation of the wind turbine and emitted laser light of the wind measurement lidar device in the Embodiment 1.

FIG. 7    is a diagram for explaining in time series the case where a start assist controller starts control of a start assist and the case of not starting control of a start assist on the basis of determination results or calculation results of a blade crossing determiner, a blade rotation speed calculator, and a coming wind velocity calculator in the Embodiment 1.

FIG. 8    is a diagram for explaining in time series the case where the start assist controller starts control of a start assist and the case of not starting control of a start assist on the basis of determination results or calculation results of the blade crossing determiner, the blade rotation speed calculator, and the coming wind velocity calculator in the Embodiment 1.

FIGS. 9A and 9B    are diagrams illustrating exemplary hardware structures of the wind turbine start assist device according to the Embodiment 1 of the present invention.

## DESCRIPTION OF EMBODIMENTS

Hereinafter, embodiments of the present invention are described in detail with reference to the drawings.

## Embodiment 1

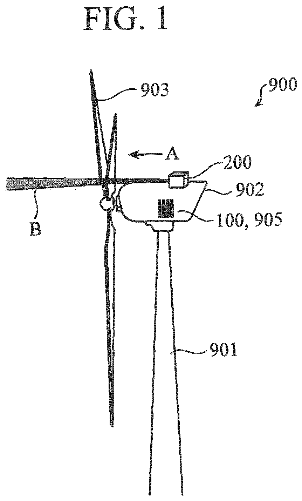

FIG. 1 is a diagram for explaining a schematic structure of a wind power generation device, in which a start assist control of starting rotation of blades 903 or control of power generation is performed by a wind turbine start assist device 100 according to Embodiment 1 of the present invention.

It is assumed that the wind power generation device is of a horizontal axis type. Hereinafter, the wind power generation device is simply referred to as a wind turbine 900.

As illustrated in FIG. 1, the wind turbine 900 includes a wind measurement lidar device 200 installed on a wind turbine nacelle 902 on a tower 901.

The wind turbine nacelle 902 includes the wind turbine start assist device 100 and a generator 905. The blades 903 are rotatably fixed to a tip of the wind turbine nacelle 902. The root of the blades 903 is connected to a rotor shaft by a hub (not illustrated). The wind turbine nacelle 902 and the blades 903 are connected via the rotor shaft from the hub.

Arrival of wind at the wind turbine 900 causes the blades 903 to rotate, and thereby power generation is performed.

The wind turbine start assist device 100 may be provided outside the wind turbine nacelle 902.

In order to enhance efficiency of the power generation of the wind turbine 900, the wind turbine start assist device 100 performs control to apply an electric current for a start assist when determining that start assist is necessary. A start assist driver 9001 (described later) assists start of the blades 903 by applying an electric current in accordance with the control by the wind turbine start assist device 100.

When the rotation of the blades 903 reaches a predetermined number of rotations, the wind turbine start assist device 100 performs control to turn off the electric current for the start assist. Accordingly, the wind turbine start assist device 100 controls the start or the end of the start assist for facilitating start of rotation of the blades 903.

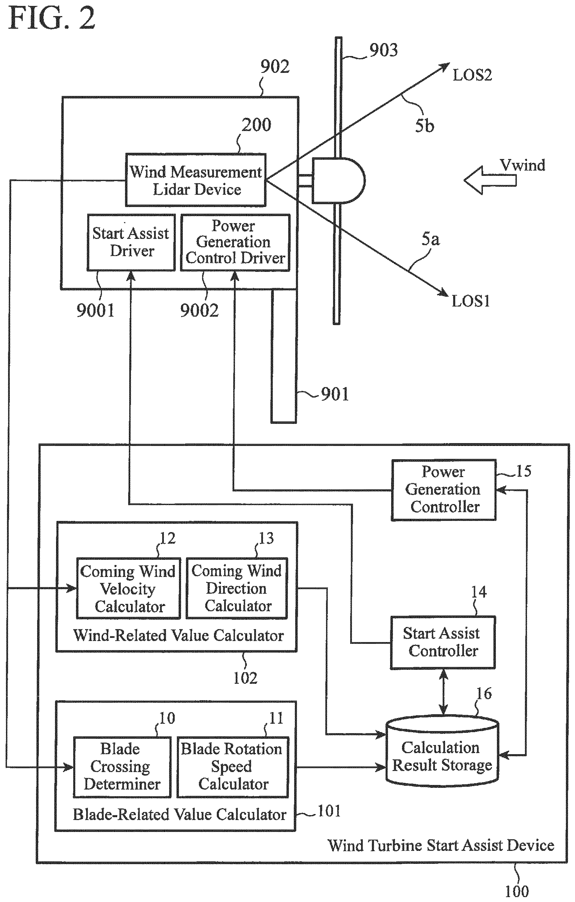

The wind turbine 900 includes the start assist driver 9001 (described later with FIG. 2). When the start assist is initiated by the wind turbine start assist device 100, the start assist driver 9001 receives a signal to start the wind turbine from the wind turbine start assist device 100 and generates the power to start the wind turbine. Details of the structure and the operation of the wind turbine start assist device 100 are explained later.

The generator 905 converts the rotation of the blades 903 into electricity under the control of the wind turbine start assist device 100, thereby performing power generation. Specifically, the generator 905 includes a power generation control driver 9002 (described later with FIG. 2). The power generation control driver 9002 receives a signal to switch to power generation operation from the wind turbine start assist device 100 and performs power generation.

As illustrated in FIG. 1, it is assumed that the wind measurement lidar device 200 is installed on the wind turbine nacelle 902 of the wind turbine 900.

The wind measurement lidar device 200 emits lasers at least in two directions, that is, transmission light B in direction A illustrated in FIG. 1. Here, it is assumed that the wind measurement lidar device 200 emits the transmission light B in two directions (5a and 5b in FIG. 2 described below). The lasers in the two directions are referred to as a first laser and a second laser.

The wind measurement lidar device 200 measures components of coming wind velocities projected in the emission directions 5a and 5b of the respective lasers as individual wind velocities in line-of-sight directions Vm1 and Vm2. The wind turbine start assist device 100 calculates the coming wind velocity Vwind and the coming wind direction cpwind, which indicates an angle with respect to the rotation axis of the blades, by numerical calculation using the wind velocities in the plurality of line-of-sight directions.

The coming wind velocity refers to a wind field in a space that is apart from the wind turbine nacelle 902 by a predetermined distance forward and that has a volume of several tens of meters in the horizontal direction and several tens of meters in the vertical direction around the height of the hub of the wind turbine 900. The predetermined distance away from the wind turbine nacelle 902 forward is assumed to be, for example, several tens of meters to several hundreds of meters. However, the predetermined distance may vary depending on the size of the wind turbine 900 or the installation environment.

The wind velocities in line-of-sight directions Vm1 and Vm2, the coming wind velocity Vwind, and the coming wind direction cpwind are explained later.

FIG. 2 is a diagram explaining the structure of the wind turbine start assist device 100 according to the Embodiment 1 of the present invention.

As illustrated in FIG. 2, the wind turbine start assist device 100 includes a blade-related value calculator 101, a wind-related value calculator 102, a start assist controller 14, a power generation controller 15, and a calculation result storage 16.

The blade-related value calculator 101 determines whether or not the blades are crossing the laser light on the basis of a measurement value of the wind measurement lidar device 200, and calculates the blade rotation speed from the blade-crossing speed measured by the wind measurement lidar device 200.

The blade-related value calculator 101 includes a blade crossing determiner 10 and a blade rotation speed calculator 11.

The blade crossing determiner 10 determines whether or not the blades 903 have crossed the first laser or the second laser, that is, whether or not the blades 903 have blocked the first laser or the second laser on the basis of the information obtained from the wind measurement lidar device 200.

When the blade crossing determiner 10 determines that the blades are rotating, the blade rotation speed calculator 11 calculates the rotation speed at the time when blades 903 of the wind turbine 900 cross the first laser light or the second laser light. The rotation speed at the time when blades 903 cross the first laser light or the second laser light is referred to as the instantaneous blade rotation speed.

In addition, the blade rotation speed calculator 11 calculates the average speed of blade rotation on the basis of a time interval at the time when blades 903 cross the first laser light or the second laser light. The average speed of blade rotation is referred to as the blade rotation average speed.

In the Embodiment 1, the blade rotation speed refers to the speed at which blades 903 cross the first laser light or the second laser light emitted from the wind measurement lidar device 200 installed on the wind turbine nacelle 902 of the wind turbine 900. The blade rotation speed includes the instantaneous blade rotation speed and the blade rotation average speed.

The wind-related value calculator 102 calculates the coming wind velocity and the coming wind direction on the basis of the measurement value of the wind measurement lidar device 200.

The wind-related value calculator 102 includes a coming wind velocity calculator 12 and a coming wind direction calculator 13.

The coming wind velocity calculator 12 obtains individual wind velocities in line-of-sight directions of the first laser and the second laser from the wind measurement lidar device 200 and calculates the coming wind velocity by using those wind velocities in the plurality of line-of-sight directions.

The coming wind direction calculator 13 obtains individual wind velocities in line-of-sight directions of the first laser and the second laser from the wind measurement lidar device 200 and calculates the coming wind direction by using the wind velocities in the plurality of line-of-sight directions.

The start assist controller 14 controls a start assist mode of the wind turbine on the basis of the information of the blade rotation speed and the coming wind velocity stored in the calculation result storage 16. Specifically, a signal for generating power for starting the wind turbine is transmitted to the start assist driver 9001 included in the wind turbine 900.

The power generation controller 15 controls a power generation operation mode of the generator 905 of the wind turbine on the basis of information to turn off the start assist output from the start assist controller 14. Specifically, a signal for switching the power generation operation is transmitted to the power generation control driver 9002 included in the wind turbine 900.

The calculation result storage 16 stores values of the blade rotation speed calculated by the blade-related value calculator 101, and the coming wind velocity and the coming wind direction calculated by the wind-related value calculator 102.

In the Embodiment 1, as illustrated in FIG. 2, although the calculation result storage 16 is included in the wind turbine start assist device 100, the present invention is not limited to this structure. The calculation result storage 16 may be provided outside the wind turbine start assist device 100.

The operation is described.

FIG. 3 is a flowchart for explaining the operation of the wind turbine start assist device 100 according to the Embodiment 1 of the present invention.

First, a detection process of the blade rotation speed and the coming wind velocity is executed (step ST301).

In step ST301, the wind turbine start assist device 100 calculates the instantaneous blade rotation speeds $\omega a$ and $\omega b$, the coming wind velocity Vwind, and the coming wind direction cpwind on the basis of measurement values of the wind measurement lidar device 200. In this step ST301, the average speed of blade rotation at the first light and the average speed of blade rotation at the second laser light are individually calculated.

Here, the average speed of blade rotation at the first light is denoted as the blade rotation average speed $\omega avea$, and the average speed of blade rotation at the second laser light is denoted as the blade rotation average speed $\omega aveb$.

For example, assuming that the number of blades 903 is i, the blade rotation average speed $\omega avea$ represents the average rotation speed in a time period from the time when an $(i - 1)$th blade 903 crosses the first laser to the time when an i-th blade 903 crosses the first laser light. The instantaneous blade rotation speed at the time when blades 903 cross the first laser light is referred to as the instantaneous blade rotation speed $\omega a$, and the instantaneous blade rotation speed at the time when blades 903 cross the second laser light is referred to as the instantaneous blade rotation speed $\omega b$.

Individual pieces of information indicating the calculated instantaneous blade rotation speeds $\omega a$ and $\omega b$, the coming wind velocity Vwind, the coming wind direction cpwind, and the blade rotation average speeds $\omega avea$ and $\omega aveb$ are stored in the calculation result storage 16.

Detailed operations of the detection process of the blade rotation speeds and the coming wind velocity in step ST301 are explained later.

The start assist controller 14 determines whether or not the latest instantaneous blade rotation speed $\omega a$ at the time when blades 903 cross the first laser, which is calculated in the process of step ST301, is larger than or equal to a predetermined reference value Ncri (step ST302). In this step ST302, it is determined whether or not the current rotation speed of the blades 903 is sufficient.

The start assist controller 14 is allowed to obtain the latest instantaneous blade rotation speed $\omega a$ from the calculation result storage 16, and allowed to determine which of instantaneous blade rotation speeds $\omega a$ stored in the calculation result storage 16 is the latest one by using time information stored in association with the instantaneous blade rotation speed $\omega a$.

In step ST302, when the instantaneous blade rotation speed $\omega a$ is smaller than a predetermined reference value Ncri ("NO" in step ST302), the start assist controller 14 determines that the rotation speed of the blades 903 is insufficient, and the flow returns to step ST301.

On the other hand, when the instantaneous blade rotation speed $\omega a$ at the time of crossing the first laser is larger than or equal to the predetermined reference value Ncri ("YES" in step ST302), the start assist controller 14 determines whether or not the blade rotation average speed $\omega avea$ is greater than or equal to the predetermined reference value Ncri (step ST303).

In the Embodiment 1, in order to avoid erroneous determination, determination is performed twice on the instantaneous blade rotation speed coa and the blade rotation average speed $\omega avea$ with reference to the reference value Ncri, that is, determination of the instantaneous blade rotation speed $\omega a$ and the reference value Ncri in step ST302 and determination of the blade rotation average speed $\omega avea$ and the reference value Ncri in step ST303.

Assuming that the foregoing determination regarding the instantaneous blade rotation speed coa is performed alone, only a component of instantaneous variation is considered, and thus there may be a possibility of erroneous determination. For this reason, the determination of the blade rotation average speed $\omega avea$ and the reference value Ncri is also performed to prevent the erroneous determination.

In step ST303, when the blade rotation average speed $\omega avea$ is smaller than the predetermined reference value Ncri ("NO" in step ST303), the start assist controller 14 determines that the rotation speed of the blades 903 is insufficient. In this case, the flow returns to step ST301.

In step ST303, when the blade rotation average speed $\omega avea$ is larger than or equal to the predetermined reference value Ncri ("YES" in step ST303), the start assist controller 14 determines that the blades 903 are rotating sufficiently. In this case, the flow proceeds to step ST304.

The start assist controller 14 determines whether or not a measurement value of the coming wind velocity Vwind calculated in the process of step ST301 is larger than zero (step ST304).

In step ST304, when the measurement value of the coming wind velocity Vwind is zero ("NO" in step ST304), the start assist controller 14 determines that the coming wind velocity is zero, and the flow returns to step ST301.

When the measurement value of the coming wind velocity Vwind is larger than zero in step ST304 ("YES" in step ST304), the start assist controller 14 determines that the instantaneous blade rotation speed coa and the blade rotation average speed ωavea at the time of crossing the first laser are greater than or equal to the reference value and the coming wind velocity is greater than zero.

In this case, the start assist controller 14 shifts to a start assist mode and performs control with the start assist mode (step ST305). Specifically, the start assist controller 14 transmits a signal for generating power for starting the wind turbine to the start assist driver 9001 included in the wind turbine 900, and initiates the start assist for facilitating start of rotation of the blades 903 of the wind turbine 900.

As a result, start of rotation of the blades 903 of the wind turbine 900 is facilitated.

The start assist controller 14 determines whether or not the blade rotation average speed ωavea has reached a reference value N1 for shifting to a power generation operation mode (step ST306). Specifically, the start assist controller 14 determines whether or not the blade rotation average speed ωavea is larger than or equal to the reference value N1 for shifting to the power generation operation mode.

In step ST306, when the blade rotation average speed ωavea has not reached the reference value N1 for shifting to the power generation operation mode ("NO" in step ST306), the flow returns to step ST301.

In step ST306, when the blade rotation average speed ωavea has reached the reference value N1 for shifting to the power generation mode ("YES" in step ST306), the start assist controller 14 terminates the start assist mode (step ST307). Specifically, the start assist controller 14 stops transmitting a signal for generating power for start of the wind turbine to the start assist driver 9001 included in the wind turbine 900.

The power generation controller 15 detects that the start assist controller 14 has terminated the start assist in step ST307 and determines whether or not the blade rotation average speed ωavea has reached a reference value N2 for starting power generation by referring to the calculation result storage 16 (step ST308). Specifically, the power generation controller 15 determines whether or not the blade rotation average speed ωavea is larger than or equal to the reference value N2 for starting power generation.

In this step ST308, it is shifted to the power generation operation mode, in which the power generation controller 15 controls the power generation of the generator 905 of the wind turbine.

As for information about termination of the start assist output from the start assist controller 14, for example, the start assist controller 14 turns on a start assist mode flag prepared internally at the time of initiating the start assist, and turns off the start assist mode flag at termination of the start assist.

Subsequently, the power generation controller 15 detects the initiation and the termination of the start assist referring on/off of the start assist mode flag. This is merely an example, and it is only required that the power generation controller 15 is able to detect initiation and termination of a start assist performed by the start assist controller 14.

In step ST308, when the blade rotation average speed ωavea has not reached the reference value N2 for starting power generation ("NO" in step ST308), the power generation controller 15 terminates the power generation control (step ST309), and the flow returns to step ST301. Specifically, the power generation controller 15 transmits a signal for terminating the power generation operation to the power generation control driver 9002 included in the wind turbine 900.

In step ST301, when the blade rotation average speed ωavea has reached the reference value N2 for starting power generation ("YES" in step ST308), the power generation controller 15 initiates power generation control (step ST310). Specifically, the power generation controller 15 transmits a signal for switching to the power generation operation to the power generation control driver 9002 included in the wind turbine 900. As a result, the wind turbine 900 is rotated depending on the coming wind velocity without the start assist.

After the power generation control has been turned on in step ST310, the processing in step ST301 is performed again. That is, the blade rotation average speed ωavea is calculated, the flow returns to step ST308, and the blade rotation average speed ωavea is monitored. Thereafter, the subsequent processing is repeated.

Next, the process of detecting the blade rotation speed and the coming wind velocity in step ST301 in FIG. 3 are described below.

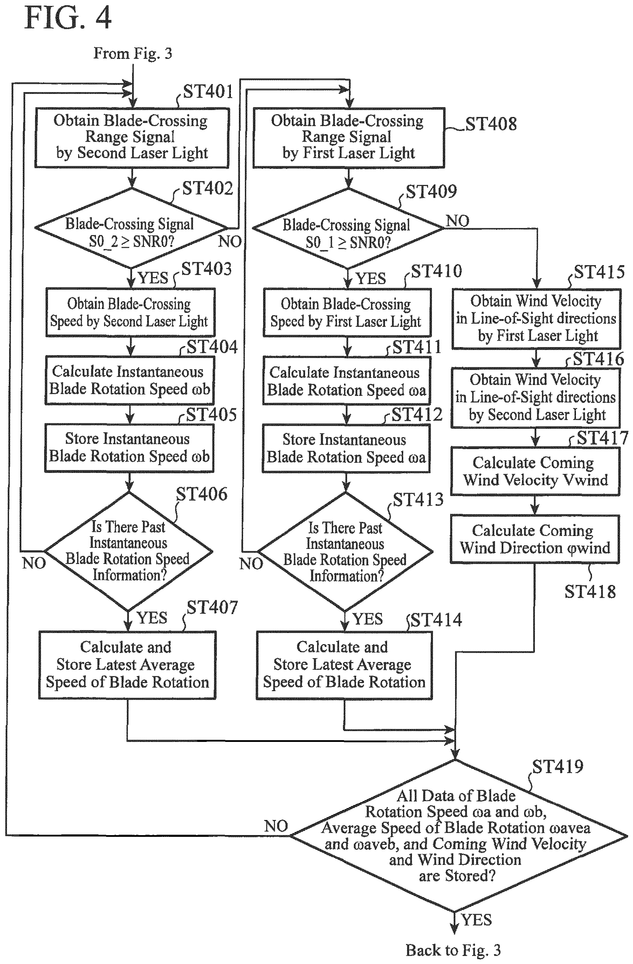

FIG. 4 is a flowchart for explaining a detection process of the blade rotation speed and the coming wind velocity in step ST301 of FIG. 3 in detail.

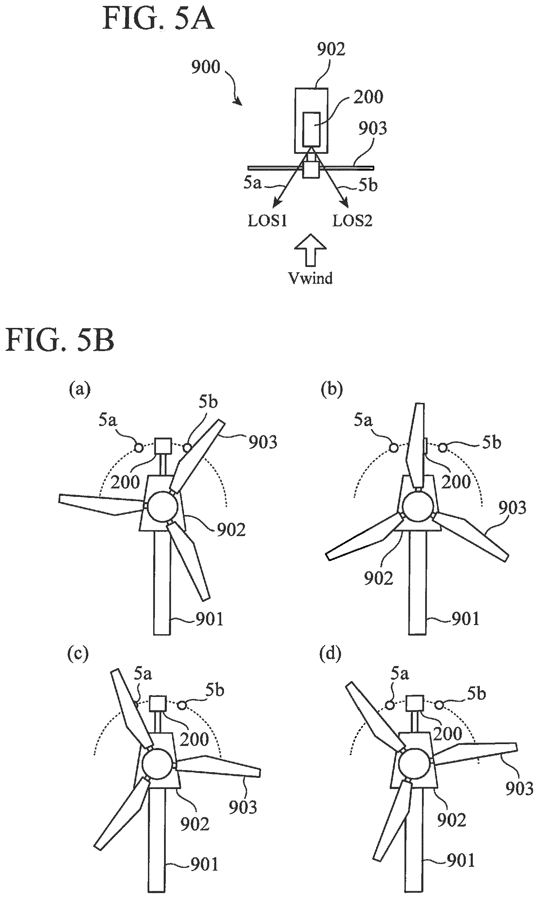

The positional relationship between laser emission directions 5a and 5b of the wind measurement lidar device 200 and the blades 903 in the detection of the blade rotation speed and the coming wind velocity according to the present invention are described with reference to FIGS. 5A and 5B.

As illustrated in FIG. 5A, the wind measurement lidar device 200 installed on the wind turbine nacelle 902 has two laser emission directions 5a and 5b. The wind measurement lidar device 200 measures components of the coming wind velocity Vwind projected in the respective laser emission directions 5a and 5b as the wind velocities in line-of-sight directions Vm1 and Vm2 (not illustrated), respectively.

It is assumed here that the first laser emission direction 5a and the second laser emission direction 5b extend on a plane parallel to the ground surface, and that the blades 903 rotate counterclockwise viewing in a direction toward the wind turbine 900.

FIG. 5B position (a) indicates the blade position where a blade 903 crosses the second laser emission direction 5b. FIG. 5B position (b) indicates the blade position where the foregoing blade 903 is in between the second laser emission direction 5b and the first laser emission direction 5a. FIG. 5B position (c) indicates the blade position where the foregoing blade 903 crosses the first laser emission direction 5a. FIG. 5B position (d) indicates the blade position where the foregoing blade 903 is not on the first laser emission direction 5a or on the second laser emission direction 5b or therebetween.

In the arrangement relationship of the blades 903 and the laser emission directions 5a and 5b of the wind measurement lidar device 200 and the blade rotation direction as illustrated in FIG. 5A, the states of positions (a), (b), (c), and (d) of FIG. 5B are repeated.

Hereinafter, description is given along the flowchart of FIG. 4.

The blade crossing determiner 10 obtains a blade-crossing range signal obtained by using the second laser light from the wind measurement lidar device 200 installed on the wind turbine nacelle 902 of the wind turbine 900 (step ST401). The blade-crossing range is a fixed numerical value determined depending on the distance between the wind measurement lidar device 200 and the rotation plane of the blades 903. The fixed numerical value is determined in advance in the wind measurement lidar device 200 when installing the wind measurement lidar device 200.

The blade crossing determiner 10 compares the signal-to-noise ratio S0_2 in the blade-crossing range signal obtained in step ST401 with the preset threshold value SNRO, and determines whether or not the signal-to-noise ratio S0_2 is greater than or equal to the threshold value SNRO (step ST402).

In step ST402, when the signal-to-noise ratio S0_2 is larger than or equal to the threshold value SNRO ("YES" in step ST402), the blade crossing determiner 10 determines that blades are crossing, and obtains the blade-crossing speed Vhub_5b of the second laser light from the wind measurement lidar device 200 (step ST403). Here, the blade-crossing speed Vhub_5b of the second laser light refers to a crossing speed at the time when blades 903 cross the second laser light. Similarly, a blade-crossing speed Vhub_5a of the first laser light refers to a crossing speed at the time when blades 903 cross the first laser light. The blade-crossing speed Vhub_5a of the first laser light is explained later.

In the wind measurement lidar device 200, the laser light is blocked by the blades 903 crossing the laser emission directions of 5a and 5b. In addition, the rotating blades 903 causes a scattered light echo having a larger signal intensity as compared to that obtained at the time of measuring the wind velocity to be received in the nearest range. Therefore, the blade crossing determiner 10 is able to obtain the blade-crossing range signal from the wind measurement lidar device 200 and determine on the basis of the obtained blade-crossing range signal whether or not the blades cross the laser light.

In step ST402, when the signal-to-noise ratio S0_2 is less than the threshold value SNRO ("NO" in step ST402), the flow proceeds to step ST408. Processing after step ST408 is described later.

The blade rotation speed calculator 11 obtains the pitch angle $\delta$ of a blade 903 from a control device (not illustrated) of the wind turbine 900, and calculates the instantaneous blade rotation speed $\omega b$ [rpm] at the time when blades 903 cross the second laser light (step ST404). The instantaneous blade rotation speed $\omega b$ [rpm] is calculated by using the obtained pitch angle $\delta$ of the blade 903 and the line-of-sight direction Doppler velocity Vhub_LOS_5b that can be calculated from the blade-crossing speed Vhub_5b of the second laser light obtained in step ST403 by using an Expression (1) below. The rotation speed at the time when blades 903 cross the first laser light or the second laser light is referred to as the instantaneous blade rotation speed. In the foregoing step ST404, the blade rotation speed calculator 11 calculates the instantaneous blade rotation speed $\omega b$.

The control device of the wind turbine 900 is installed in the hub. The control device performs pitch control for changing the pitch angle $\delta$ in dependence on the wind velocity on a pitch driving device (not illustrated) or performs, on a yaw driving device (not illustrated), yaw control to rotate the orientation of the blades 903, the hub, and the wind turbine nacelle 902 in accordance with the wind direction.

Information of the blade radius R and an angle $\theta$ formed by the laser emission directions with respect to the blade rotation axis is stored, for example, by the wind measurement lidar device 200. Thus, the information can be obtained from the wind measurement lidar device 200. An angle formed by the laser emission direction 5a with respect to the blade rotation axis is defined as $+\theta$, and an angle formed by the laser emission direction 5b with respect to the blade rotation axis is defined as $-\theta$.

$$\omega_b = \frac{60}{2\pi R} \cdot \frac{1}{\tan\delta\cos\theta} V_{hub\_LOS\_5b} \qquad (1)$$

R:    blade radius

$\delta$:    pitch angle of blade

$\theta$:    angle formed by laser emission direction with respect to blade rotation axis

The principle by which the instantaneous blade rotation speed $\omega b$ [rpm] is calculated from the above Expression (1) is described.

In a time period during which a blade 903 crosses the laser light, that is, during which the laser light is blocked by the rotating blade 903, the distance between a scattering point in a blade 903 and the wind measurement lidar device 200 varies with time due to the pitch angle $\delta$ of the blade 903. As a result, the Doppler velocity is generated in the scattered light. The blade rotation speed can be obtained utilizing the above principle.

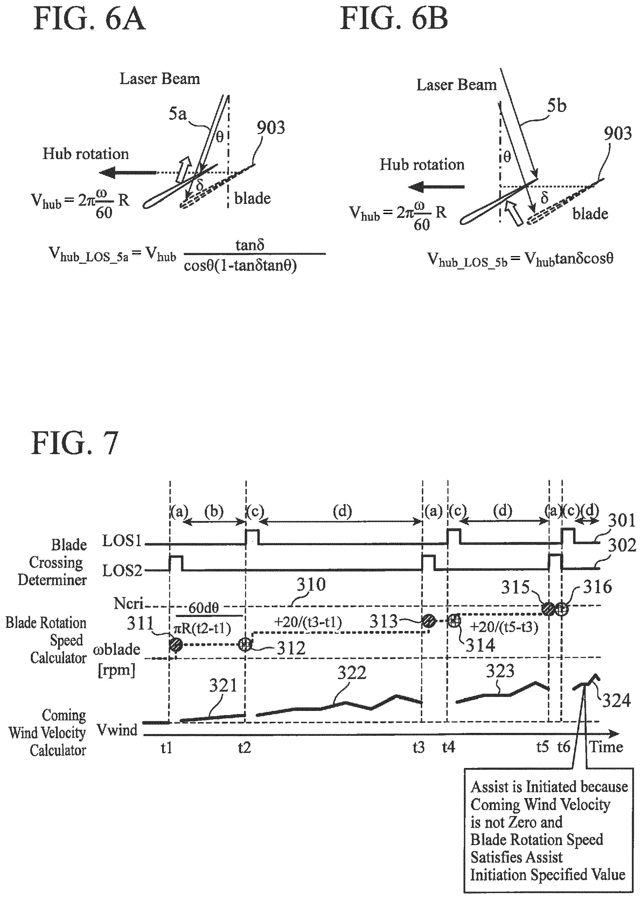

FIGS. 6A and 6B are diagrams illustrating the relationship between blade rotation of the wind turbine 900 and emitted laser light of the wind measurement lidar device 200. FIG. 6A is a diagram illustrating reflection by a blade 903 in the laser emission direction 5a of the wind measurement lidar device 200. FIG. 6B is a diagram illustrating reflection by the blade 903 in the laser emission direction 5b of the wind measurement lidar device 200.

With a pitch angle $\delta$ of a blade 903 of the wind turbine 900, an instantaneous blade rotation speed $\omega$ [rpm], and a blade radius R, a blade-crossing speed Vhub at a laser emission position is expressed by the following Expression (2).

$$V_{hub} = 2\pi \frac{\omega}{60} R \qquad (2)$$

In this case, the line-of-sight direction Doppler velocities Vhub_Los_5a and Vhub_Los_5b in the laser emission directions 5a and 5b are expressed by the following Expressions (3) and (4), respectively.

$$V_{hub\_LOS\_5a} = V_{hub} \frac{\tan\delta}{\cos\theta(1 - \tan\delta\tan\theta)} \qquad (3)$$

$$V_{hub\_LOS\_5b} = V_{hub} \tan\delta\cos\theta \qquad (4)$$

Therefore, by using the measurement value of the line-of-sight direction Doppler velocity Vhub_Los_5b at the nearest distance to the laser emission direction 5b, the instantaneous blade rotation speed $\omega$b [rpm] at the time when blades 903 cross the second laser light can be calculated from the above Expression (1).

Similarly, by using the measurement value of the line-of-sight direction Doppler velocity Vhub_Los_5a at the nearest distance to the laser emission direction 5a, the instantaneous blade rotation speed $\omega$a [rpm] when blades 903 cross the first laser light can be calculated from the following Expression (5).

$$\omega_a = \frac{60}{2\pi R} \cdot \frac{\cos\theta(1 - \tan\delta \cdot \tan\theta)}{\tan\delta} V_{hub\_LOS\_5a} \qquad (5)$$

As described above, in step ST404, the blade rotation speed calculator 11 obtains the pitch angle $\delta$ of a blade 903 from a control device (not illustrated) of the wind turbine 900. The blade rotation speed calculator 11 calculates the instantaneous blade rotation speed $\omega$b [rpm] at the time when blades 903 cross the second laser light by using the obtained pitch angle $\delta$ of the blade 903 and the line-of-sight direction Doppler velocity Vhub_LOS_5b that can be calculated from the blade-crossing speed Vhub_5b of the second laser light obtained in step ST403.

The blade rotation speed calculator 11 stores in the calculation result storage 16 the instantaneous blade rotation speed $\omega$b [rpm], which is calculated in step ST404 at the time when blades 903 cross the second laser light, with linking to time information (step ST405). For example, assuming that a time point where blades 903 cross the second laser light at a j-th time is denoted as t(j), the blade rotation speed calculator 11 stores the instantaneous blade rotation speed cob(t(j)) [rpm] calculated in step ST404 in the calculation result storage 16.

The blade rotation speed calculator 11 searches the calculation result storage 16 for information of a past instantaneous blade rotation speeds $\omega$b, that is, information of an instantaneous blade rotation speed $\omega$b which is calculated prior to the time linked to the instantaneous blade rotation speed $\omega$b calculated in step ST404 (step ST406).

For example, assuming that the instantaneous blade rotation speed $\omega$b calculated in step ST404 and stored in the calculation result storage 16 in step ST405 is an instantaneous blade rotation speed $\omega$b at time t(j) when blades 903 cross the second laser light for the j-th time, the blade rotation speed calculator 11 searches the calculation result storage 16 for information of an instantaneous blade rotation speed $\omega$b which is calculated prior to time t(j - 1).

In step ST406, when there is no information of past instantaneous blade rotation speed $\omega$b ("NO" in step ST406), the flow returns to step ST401.

In step ST406, when there is information of past instantaneous blade rotation speed $\omega$b ("YES" in step ST406), the blade rotation speed calculator 11 calculates by using the following Expression (6) a latest average speed of blade rotation at the second laser light, that is, an average speed at the time linked to the instantaneous blade rotation speed ωb calculated in step ST404 (step ST407).

$$\omega = \frac{60}{nT} \qquad\qquad (6)$$

As described above, in the wind measurement lidar device 200, the laser light is blocked by the blades 903 crossing the two laser emission directions of 5a and 5b, and the rotating blades 903 causes a scattered light echo having a larger signal intensity as compared to that obtained at the time of measuring the wind velocity to be received in the nearest range. As a result, it is possible to determine whether or not the blades cross the laser light.

For example, in the case where a wind turbine having n blades rotates at a constant instantaneous blade rotation speed ω [rpm], blockage of laser light is observed in a cycle T in one laser emission direction 5a or 5b. The relationship between T and ω is expressed by the foregoing Expression (6).

Accordingly, it is possible to calculate the average speed of blade rotation from a cycle obtained by monitoring the optical path blocking time in the laser emission direction. That is, the average speed of blade rotation is calculated on the basis of the time interval at the time when blades 903 cross the laser light.

The blade rotation speed calculator 11 calculates the average rotation speed of the blades 903 by using the Expression (6). Here, the average speed of blade rotation at the time when blades 903 cross the first laser light or the second laser light is denoted as the blade rotation average speeds ωavea and ωaveb, respectively, and the blade rotation speed calculator 11 calculates the blade rotation average speeds ωavea and ωaveb, respectively, from the Expression (6). In step ST407, the blade rotation speed calculator 11 calculates the blade rotation average speed ωaveb, which is the average speed of blade rotation at the time of crossing the second laser light.

The cycle T of observation of blockage of the laser light can be calculated, for example, by finding a difference between the time when an (n - 1)th blade 903 crosses the second laser light and the time when an n-th blade 903 crosses through the second laser light.

The blade rotation speed calculator 11 stores the blade rotation average speed ωaveb in the calculation result storage 16 with linking to the time information indicating the time when the instantaneous blade rotation speed ωb is calculated in step ST404. In the case where the blade rotation average speed ωaveb is already stored in the calculation result storage 16, the blade rotation speed calculator 11 updates the blade rotation average speed ωaveb. After that, the flow proceeds to step ST419.

On the other hand, in step ST402, when the signal-to-noise ratio S0_2 is not larger than or equal to the threshold value SNRO ("NO" in step ST402), the flow shifts to step ST408.

The operations of steps ST408 to ST414 are provided for performing the calculation of the instantaneous blade rotation speed and the blade rotation average speed with respect to the first laser emission direction 5a in the equivalent manner to the second laser emission direction 5b in steps ST401 to ST407.

The blade crossing determiner 10 obtains a blade-crossing range signal obtained by using the first laser light from the wind measurement lidar device 200 installed on the wind turbine nacelle 902 of the wind turbine 900 (step ST408).

The blade crossing determiner 10 compares the signal-to-noise ratio S0_1 in the blade-crossing range signal obtained in step ST408 with the preset threshold value SNRO, and determines whether or not the signal-to-noise ratio S0_1 is greater than or equal to the threshold value SNRO (step ST409).

In step ST409, when the signal-to-noise ratio S0_1 is larger than or equal to the threshold value SNRO ("YES" in step ST409), the blade crossing determiner 10 determines that blades are crossing and obtains the blade-crossing speed Vhub_5a of the first laser light from the wind measurement lidar device 200 (step ST410).

The blade rotation speed calculator 11 obtains the pitch angle δ of a blade 903 from the control device of the wind turbine 900, and calculates the instantaneous blade rotation speed coa [rpm] at the time when blades 903 cross the first laser light (step ST411). The instantaneous blade rotation speed coa [rpm] is calculated by using the obtained pitch angle δ of the blade 903 and the line-of-sight direction Doppler velocity Vhub_LOS_5a that can be calculated from the blade-crossing speed Vhub_5a of the first laser light obtained in step ST410 by using the Expression (5) described above.

The blade rotation speed calculator 11 stores, in the calculation result storage 16, the instantaneous blade rotation speed coa [rpm], which is calculated in step ST411 at the time when blades 903 cross the first laser light with association with information of time (step ST412). For example, assuming that a time point where blades 903 cross the first laser light at an i-th time after measurement using the first laser light is started is denoted as t(i), the blade rotation speed calculator 11 stores the instantaneous blade rotation speed ωa(t(i)) [rpm] calculated in step ST411 in the calculation result storage 16.

The blade rotation speed calculator 11 searches the calculation result storage 16 for information of a past instantaneous blade rotation speeds ωa, that is, information of the instantaneous blade rotation speed ωa which is calculated prior to the time linked to the instantaneous blade rotation speed coa calculated in step ST411 (step ST413).

For example, assuming that the instantaneous blade rotation speed coa calculated in step ST411 and stored in the calculation result storage 16 in step ST412 is the instantaneous blade rotation speed ωa at time t(i) when blades 903 cross the first laser light for the i-th time, the blade rotation speed calculator 11 searches the calculation result storage 16 for information of the instantaneous blade rotation speed ωa which is calculated prior to time t(i - 1).

In step ST413, when there is no information of past instantaneous blade rotation speeds coa ("NO" in step ST413), the flow returns to step ST408.

In step ST413, when there is information of past instantaneous blade rotation speed ωa ("YES" in step ST413), the blade rotation speed calculator 11 calculates by using the foregoing Expression (6) a latest average of the instantaneous blade rotation speed ωa, that is, an average of the instantaneous blade rotation speed ωa at time when the instantaneous blade rotation speed ωa is calculated in step ST411 (step ST414).

The blade rotation speed calculator 11 stores in the calculation result storage 16 the average of the instantaneous blade rotation speed ωa, that is, the blade rotation average speed ωavea, with linking to information indicating the time when the instantaneous blade rotation speed coa is calculated in step ST411. In the case where the blade rotation average speed ωavea is already stored in the calculation result storage 16, the blade rotation speed calculator 11 updates the blade rotation average speed ωavea. After that, the flow proceeds to step ST419.

On the other hand, in step ST409, when the signal-to-noise ratio S0_1 is not larger than or equal to the threshold value SNRO ("NO" in step ST409), the flow proceeds to step ST415.

In steps ST415 to ST418, wind velocities in line-of-sight directions in the laser emission directions 5a and 5b are obtained from the wind measurement lidar device 200, and the wind-related value calculator 102 calculates the coming wind velocity and the coming wind direction.

The coming wind velocity calculator 12 included in the wind-related value calculator 102 obtains from the wind measurement lidar device 200 the wind velocity in line-of-sight directions Vm1 in the first laser emission direction 5a (step ST415).

The coming wind velocity calculator 12 obtains from the wind measurement lidar device 200 the wind velocity in line-of-sight direction Vm2 in the second laser emission direction 5b (step ST416).

The coming wind velocity calculator 12 calculates the coming wind velocity Vwind by assigning, to the following Expression (7), the wind velocity in line-of-sight direction Vm1 in the first laser emission direction 5a obtained in step ST415 and the wind velocity in line-of-sight direction Vm2 in the second laser emission direction 5b obtained in step ST416 (step ST417). The coming wind velocity calculator 12 links the calculated coming wind velocity Vwind to a time point where the coming wind velocity Vwind is calculated, and stores the calculated coming wind velocity Vwind in the calculation result storage 16.

$$V_{wind} = \sqrt{\left(\frac{V_{m1} + V_{m2}}{2\cos\theta}\right)^2 + \left(\frac{V_{m1} - V_{m2}}{2\sin\theta}\right)^2} \qquad (7)$$

In the above example, the coming wind velocity calculator 12 calculates the coming wind velocity Vwind by using the Expression (7) as described above. Alternatively, the coming wind velocity calculator 12 may obtain the coming wind velocity from the wind measurement lidar device 200 and use the obtained coming wind velocity as the coming wind velocity Vwind. This is because the wind measurement lidar device 200 is capable of measuring the coming wind velocity in real time.

The coming wind direction calculator 13 included in the wind-related value calculator 102 calculates the coming wind direction φwind by assigning, to the following Expression (8), the wind velocity in line-of-sight direction Vm1 in the first laser emission direction 5a obtained by the coming wind velocity calculator 12 in step ST415 and the wind velocity in line-of-sight direction Vm2 in the second laser emission direction 5b obtained by the coming wind velocity calculator 12 in step ST416 (step ST418). The coming wind direction calculator 13 links the calculated coming wind direction φwind to a time point where the coming wind direction φwind is calculated and stores the coming wind direction φwind in the calculation result storage 16.

$$\phi_{wind} = \tan^{-1}\left[\left(\frac{V_{m1} - V_{m2}}{2\sin\theta}\right) \Big/ \left(\frac{V_{m1} + V_{m2}}{2\cos\theta}\right)\right] \qquad (8)$$

In step ST419, the controller (not illustrated) checks whether or not all data indicating the instantaneous blade rotation speeds coa and ωb, the blade rotation average speeds ωavea and ωaveb, the coming wind velocity Vwind, and the coming wind direction φwind is stored.

When all data is stored in step ST419 ("YES" in step ST419), the processing of FIG. 4 ends, and the flow returns to FIG. 3.

In step ST419, if all data is not stored ("NO" in step ST419), the flow returns to step ST401.

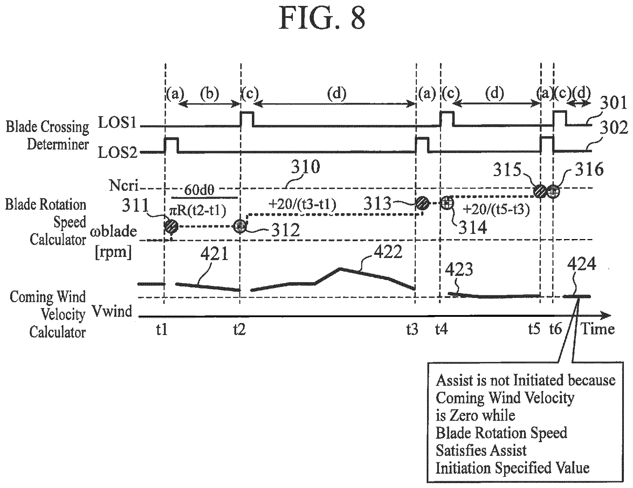

FIGS. 7 and 8 are diagrams for explaining in time series the case where the start assist controller 14 starts control of a start assist and the case of not starting control of a start assist on the basis of determination results or calculation results of the blade crossing determiner 10, the blade rotation speed calculator 11, and the coming wind velocity calculator 12 in the Embodiment 1.

In FIGS. 7 and 8, an example is illustrated for the sake of convenience such that, time points t when a blade 903 crosses through the first laser are denoted as t2, t4, and t6 in the order of lapse of time, and time points t when the blade 903 crosses through the second laser are denoted as t1, t3, and t5 in the order of lapse of time. In addition, it is determined whether or not to initiate control of a start assist at a time point t6.

In FIGS. 7 and 8, time series images of blade crossing detection signals are illustrated along the upper line, and the blade-crossing range signals 301 and 302 in the respective emission directions 5a and 5b of the first laser and the second laser of the wind measurement lidar device 200 are illustrated.

In FIGS. 7 and 8, a time series image of the blade rotation speed is illustrated along the middle line. In FIGS. 7 and 8, blade rotation speeds 311, 313, and 315 in the second laser emission direction 5b at t = t1, t3, and t5, respectively, are illustrated.

In FIGS. 7 and 8, blade rotation speeds 312, 314, and 316 in the first laser emission direction 5a at t = t2, t4, and t6, respectively, are illustrated.

In FIGS. 7 and 8, a blade rotation speed Ncri 310, which is a speed value serving as a reference for initiating start assist of the wind turbine 900, is illustrated.

In FIGS. 7 and 8, a time series image of the coming wind velocity Vwind is illustrated along the lower line.

The blade crosses the second laser emission direction 5b at the time points t = t1, t3, and t5, and the blade crosses the first laser emission direction 5a at the time points t = t2, t4, and t6.

In FIGS. 7 and 8, both the information such as the blade rotation speed by the first laser light and the information such as the blade rotation speed by the second laser light are illustrated. Here as described with reference to FIG. 3, it is determined whether or not to initiate start assist of the wind turbine 900 by using the latest instantaneous blade rotation speed ωa, the blade rotation average speed ωavea, and the coming wind velocity Vwind when the blade 903 crosses the first laser.

In the example of FIG. 7 in which start assist of the wind turbine 900 is initiated, the coming wind velocity Vwind 321 in the period between t1 and t2 increases with time as illustrated by the coming wind velocities Vwind 322, 323, and 324.

At the time point t6, the blade rotation speed 316, that is, the instantaneous blade rotation speed coa and the blade rotation average speed ωavea exceed the blade rotation speed Ncri 310 which is a reference for initiating start assist of the wind turbine 900, and the coming wind velocity 324 is not zero. In this case, the start assist of the wind turbine 900 is initiated.

On the other hand, in the example of FIG. 8, in which the start assist of the wind turbine 900 is not initiated, the coming wind velocity Vwind 421 in the period between t1 and t2 decreases with time as illustrated by the coming wind velocities Vwind 422, 423, and 424.

At the time point t6, although the blade rotation speed 316, that is, the instantaneous blade rotation speed ωa and the blade rotation average speed ωavea exceed the blade rotation speed Ncri 310 which is a reference for initiating start assist of the wind turbine 900, the coming wind velocity Vwind 424 is zero. In this case, the wind turbine assist is not initiated.

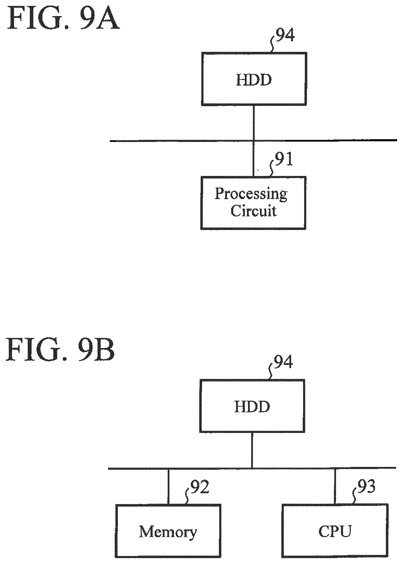

FIGS. 9A and 9B are diagrams illustrating exemplary hardware structures of the wind turbine start assist device 100 according to the Embodiment 1 of the invention.

In the Embodiment 1 of the present invention, the respective functions of the blade crossing determiner 10, the blade rotation speed calculator 11, the coming wind velocity calculator 12, the coming wind direction calculator 13, the start assist controller 14, and the power generation controller 15 are implemented by a processing circuit 91. That is, the wind turbine start assist device 100 includes the processing circuit 91 for performing start assist control or power generation control on the basis of measured values obtained from the wind measurement lidar device 200.

The processing circuit 91 may be dedicated hardware as illustrated in FIG. 9A or may be a CPU 93 for executing a program stored in a memory 92 as illustrated in FIG. 9B.

In the case where the processing circuit 91 is dedicated hardware, the processing circuit corresponds to, for example, a single circuit, a composite circuit, a programmed processor, a parallel programmed processor, an ASIC, an FPGA, or a combination thereof.

In the case where the processing circuit 91 is the CPU 93, the respective functions of the blade crossing determiner 10, the blade rotation speed calculator 11, the coming wind velocity calculator 12, the coming wind direction calculator 13, the start assist controller 14, and the power generation controller 15 are implemented by software, firmware, or a combination of software and firmware.

That is, the blade crossing determiner 10, the blade rotation speed calculator 11, the coming wind velocity calculator 12, the coming wind direction calculator 13, the start assist controller 14, and the power generation controller 15 are implemented by a processing circuit such as the CPU 93 and a system LSI for executing a program stored in an HDD 94, the memory 92, or the like.

It is further understood that the program stored in the HDD 94, the memory 92, or the like causes a computer to execute procedures or methods of the blade crossing determiner 10, the blade rotation speed calculator 11, the coming wind velocity calculator 12, the coming wind direction calculator 13, the start assist controller 14, and the power generation controller 15. Here, the memory 92 may be a nonvolatile or a volatile semiconductor memory such as a RAM, a ROM, a flash memory, an EPROM, an EEPROM, a magnetic disk, a flexible disk, an optical disk, a compact disk, a mini disk, a DVD, or the like.

A part of the functions of the blade crossing determiner 10, the blade rotation speed calculator 11, the coming wind velocity calculator 12, the coming wind direction calculator 13, the start assist controller 14, and the power generation controller 15 may be implemented by dedicated hardware while the other part may be implemented by software or firmware.

For example, the function of the blade crossing determiner 10 can be implemented by the processing circuit 91 as dedicated hardware, while the functions of the blade rotation speed calculator 11, the coming wind velocity calculator 12, the coming wind direction calculator 13, the start assist controller 14, and the power generation controller 15 can be implemented by the processing circuit reading and executing the program stored in the memory 92.

For example, the HDD 94 may be used as the calculation result storage 16. This is merely one example, and the calculation result storage 16 may be configured by a DVD, the memory 92, or the like.

As described above, according to the Embodiment 1, since the start assist of the wind turbine 900 is performed after the blades 903 slightly rotate, there is an effect of reducing electric power required for the assist.

The start assist is only performed in the case where the latest instantaneous blade rotation speed coa and the blade rotation average speed $\omega$avea when the blade 903 crosses the first laser are larger than or equal to the predetermined reference value Ncri and the coming wind velocity is not zero. Thus, there is an effect that the probability of start failure can be reduced.

Two types of blade rotation speeds are obtained by calculating the instantaneous blade rotation speeds $\omega$a and $\omega$b from Doppler velocities at the time when a blade crosses and also calculating the blade rotation average speeds $\omega$avea and $\omega$aveb from a blade crossing time interval at the time when a blade crosses, and each of which is compared with a reference value. After that, it is determined whether or not the blades 903 are sufficiently rotating. This contributes to improving the accuracy.

In addition, a sensor for detecting blade rotation of the wind turbine 900 is unnecessary. Therefore, it is possible to be installed in an existing wind turbine having no rotation detection sensor.

In the above description, the start assist controller 14 determines whether or not the latest instantaneous blade rotation speed coa at the time when blades 903 cross the first laser calculated in the process of step ST301 is larger than or equal to the predetermined reference value Ncri in step ST302 in FIG. 3. The present invention is not limited to this configuration.

The start assist controller 14 may determine whether or not the latest instantaneous blade rotation speed $\omega$b at the time when blades 903 cross the second laser calculated in the process of step ST301 is larger than or equal to the predetermined reference value Ncri during steady rotation in which blade rotation has approached a steady state.

This is because the instantaneous blade rotation speed $\omega$a and the instantaneous blade rotation speed $\omega$b can be deemed equivalent during steady rotation. The reason why those speeds can be deemed equivalent is that, an angular difference between the emission direction of the first laser light and the emission direction of the second laser light is assumed to be within 10° to 60° and that blade-crossing points for the respective rays of laser light are assumed to be equivalent to the distance between the wind measurement lidar device 200 and the rotation plane of the blades. The distance between the wind measurement lidar device 200 and the rotation plane of the blades is about 1 m.

On the other hand, during unsteady rotation in which blade rotation is in an unsteady state such as at the time of start of the wind turbine 900, a sign of a calculation result (= the latest instantaneous blade rotation speed $\omega$a - the latest instantaneous blade rotation speed $\omega$b) enables estimation of a rotation tendency, and the rotation tendency can also be used as an index for determining the necessity of assist.

For example, if (coa - $\omega$b) > 0, it is understood that the instantaneous blade rotation speed tends to increase. If ($\omega$a - $\omega$b) < 0, the instantaneous blade rotation speed tends to decrease, which serves as one of the indicators for determining the necessity of the assist.

Therefore, the wind turbine start assist device 100 according to the Embodiment 1 calculates the instantaneous blade rotation speed $\omega$a and the instantaneous blade rotation speed $\omega$b and stores the resulting values in the calculation result storage 16 as described in FIG. 4.

In the case where the start assist controller 14 determines whether or not the latest instantaneous blade rotation speed ωb at the time when blades 903 cross the second laser calculated in the process of step ST301 is larger than or equal to the predetermined reference value Ncri in step ST302 in FIG. 3, it is determined in step ST303 whether or not the blade rotation average speed ωaveb at the time when blades 903 cross the second laser is larger than or equal to the predetermined reference value Ncri.

In addition, as disclosed above, the instantaneous blade rotation speed ωa and the blade rotation average speed ωavea are compared with the reference value Ncri in order to prevent erroneous determination. The present invention is not limited to this configuration. The comparison of the instantaneous blade rotation speed ωa with the reference value Ncri may not be performed, or the comparison of the blade rotation average speed ωavea with the reference value Ncri may not be performed.

Although the wind measurement lidar device 200 emits transmission light in two directions, the present invention is not limited to this configuration. Alternatively, the wind measurement lidar device 200 may emit transmission light only in one direction or in three or more directions.

In the case where the wind measurement lidar device 200 emits laser light in three or more directions, it is also possible to detect a wind velocity component in the vertical direction, that is, updraft and downdraft.

It is assumed here that the wind measurement lidar device 200 is installed outside the wind turbine 900.

There is an effect that installation of the wind measurement lidar device 200 enables measurement of the coming wind from a distant place with high accuracy.

The wind measurement lidar device 200 has a function of separating and measuring wind velocity components parallel to an emission direction of laser light, that is, a line-of-sight direction, for each distance. By installing the wind measurement lidar device 200 in the wind turbine nacelle 902, a wind field of the coming wind velocity from a distant place, for example in front of the wind turbine 900, can be monitored in real time for each arrival distance such as for each of a plurality of sections obtained by dividing the distance of several hundreds of meters in front of the wind turbine 900 into several tens of meters.

In the case where a conventional wind-cup type anemometer is installed at a distant point, the wind velocity at only one point per anemometer can be monitored, and thus variations in the coming wind velocity cannot be captured with a good accuracy.

The height of the hub of the wind turbine 900 is several tens of meters. With an anemometer installed on the ground it is necessary to estimate the wind velocity at the height of the hub from the wind velocity on the ground, and thus it is inevitable that the accuracy drops.

If an anemometer is installed at a mast having the height of several tens of meters, it is not impossible to measure the wind velocity at the height of the hub. However, there may be problems that the installation cost of the mast is incurred and that the wind arriving at the wind turbine is disturbed by the mast, thus deteriorating the power generation efficiency.

When the wind direction around the wind turbine 900 changes, the wind turbine nacelle 902 is rotated in an azimuth direction to face in the coming wind direction. However, in the case of a conventional wind-cup type anemometer, it is necessary to arrange a plurality of anemometers around the wind turbine 900, and as described above, there are problems that the installation cost of the anemometer is incurred and that the coming wind is blocked by the plurality of masts, and thus deterioration of the power generation efficiency is inevitable.

For solving such problems, the wind measurement lidar device 200 is installed in the wind turbine nacelle 902. Therefore, there are effects that the wind measurement lidar device 200 can measure the wind velocity coming and arriving at the wind turbine 900 with high accuracy and that monitoring in real time for each arrival distance is possible.

The wind turbine start assist device 100 is configured as illustrated in FIG. 2 in the Embodiment 1 and that the foregoing effects can be obtained because the wind turbine start assist device 100 includes the blade rotation speed calculator 11, the coming wind velocity calculator 12, and the start assist controller 14.

Within the scope of the present invention, the present invention may include a modification of any component of the respective embodiments, or an omission of any component of the respective embodiments.

The wind turbine start assist device according to the present invention is configured to enable a wind turbine to be started efficiently at a gentle wind speed, enhancing effective generated power. Therefore, the present invention can be applied to a wind turbine start assist device or the like for starting a wind power generation device at a gentle wind velocity.

LIST OF REFERENCE SIGNS

10    Blade crossing determiner
11    Blade rotation speed calculator

| 12 | Coming wind velocity calculator |
|---|---|
| 13 | Coming wind direction calculator |
| 14 | Start assist controller |
| 15 | Power generation controller |
| 16 | Calculation result storage |
| 91 | Processing circuit |
| 92 | Memory |
| 93 | CPU |
| 94 | HDD |
| 100 | Wind turbine start assist device |
| 200 | Wind measurement lidar device |
| 900 | Wind turbine |
| 901 | Tower |
| 902 | Wind turbine nacelle |
| 903 | Blade |
| 905 | Generator |
| 9001 | Start assist driver |
| 9002 | Power generation control driver |

**Claims**

1. A wind turbine start assist controlling device, comprising:

   - a blade rotation speed calculator to calculate a blade rotation speed of blades of a wind turbine, the blades crossing laser light emitted by a wind measurement lidar device installed on a wind turbine nacelle of the wind turbine;
   - a coming wind velocity calculator to calculate a coming wind velocity on a basis of a wind velocity in line-of-sight direction of the laser light, the wind velocity being obtained from the wind measurement lidar device; and
   - a start assist controller to control a start assist for starting rotation of the blades on a basis of the blade rotation speed calculated by the blade rotation speed calculator and the coming wind velocity calculated by the coming wind velocity calculator.

2. The wind turbine start assist controlling device according to claim 1,
   wherein the start assist controller is adapted to initiate a start assist for facilitating start of rotation of the blades when the blade rotation speed is larger than or equal to a reference value and the coming wind velocity is larger than zero.

3. The wind turbine start assist controlling device according to claim 1,
   wherein the blade rotation speed calculated by the blade rotation speed calculator includes an instantaneous blade rotation speed and an average speed of blade rotation, the instantaneous blade rotation speed being calculated on a basis of a Doppler velocity at a time when the blade crosses the laser light, the average speed of blade rotation being calculated on a basis of a time interval between time points when the blades cross the laser light, and
   wherein the start assist controller is adapted to initiate the start assist when the instantaneous blade rotation speed and the average speed of blade rotation are both larger than or equal to a reference value and the coming wind velocity is larger than zero.

# FIG. 1

# FIG. 2

# FIG. 3

```
                          Start

                         ST301
              ┌──────────────────────┐
              │   Detection Process   │
              │ of Blade Rotation Speed│
              │ and Coming Wind Velocity│
              └──────────────────────┘
                         ST302                              ST309
                  Instantaneous      NO              Terminate Power
                Blade Rotation Speed  ───────────►   Generation Control
                     ωa ≥ Ncri?
                         YES
                         ST303
                      Blade
          NO    Rotation Average Speed
          ◄─────     ωavea ≥ Ncri?                        ST308
                         YES                          Rotation
                         ST304                      Average Speed      NO
                      Coming                        ωavea ≥ Ncri?  ─────
          NO        Wind Velocity
          ◄─────      Vwind > 0?                          YES      ST310
                         YES        ST305           ┌──────────────────┐
              ┌──────────────────┐                  │  Initiate Power  │
              │  Initiate Start  │                  │ Generation Control│
              │  Assist Control  │                  └──────────────────┘
              └──────────────────┘                         ST301
                         ST306                     ┌──────────────────────┐
                  Blade Rotation                   │ Detection Process of  │
          NO      Average Speed                    │ Blade Rotation Speed  │
          ◄─────    ωavea ≥ Ncri?                   │and Coming Wind Velocity│
                         YES        ST307          └──────────────────────┘
              ┌──────────────────┐
              │Terminate Start Assist│
              │     Control       │
              └──────────────────┘
```

# FIG. 4

From Fig. 3

ST401

Obtain Blade-Crossing
Range Signal
by Second Laser Light

ST408

Obtain Blade-Crossing
Range Signal
by First Laser Light

ST402

Blade-Crossing Signal
S0_2 ≥ SNR0?          NO

YES   ST403

Obtain Blade-Crossing
Speed by Second Laser Light

ST404

Calculate Instantaneous
Blade Rotation Speed ωb

ST405

Store Instantaneous
Blade Rotation Speed ωb

ST406

Is There Past
Instantaneous
Blade Rotation Speed
Information?
NO

YES   ST407

Calculate and
Store Latest Average
Speed of Blade Rotation

ST409

Blade-Crossing Signal
S0_1 ≥ SNR0?          NO

YES   ST410

Obtain Blade-Crossing
Speed by First Laser Light

ST411

Calculate Instantaneous
Blade Rotation Speed ωa

ST412

Store Instantaneous
Blade Rotation Speed ωa

ST413

Is There Past
Instantaneous
Blade Rotation Speed
Information?
NO

YES   ST414

Calculate and
Store Latest Average
Speed of Blade Rotation

ST415

Obtain Wind Velocity
in Line-of-Sight directions
by First Laser Light

ST416

Obtain Wind Velocity
in Line-of-Sight directions
by Second Laser Light

ST417

Calculate Coming
Wind Velocity Vwind

Calculate Coming
Wind Direction φwind

ST418

ST419

All Data of Blade
Rotation Speed ωa and ωb,
Average Speed of Blade Rotation ωavea
and ωaveb, and Coming Wind Velocity
and Wind Direction
are Stored?

NO

YES

Back to Fig. 3

# FIG. 5A

# FIG. 5B

# FIG. 6A

Laser Beam

5a

903

θ

Hub rotation

δ

blade

$$V_{hub} = 2\pi\frac{\omega}{60}R$$

$$V_{hub\_LOS\_5a} = V_{hub}\,\frac{\tan\delta}{\cos\theta(1-\tan\delta\tan\theta)}$$

# FIG. 6B

Laser Beam

5b

903

θ

Hub rotation

δ

blade

$$V_{hub} = 2\pi\frac{\omega}{60}R$$

$$V_{hub\_LOS\_5b} = V_{hub}\tan\delta\cos\theta$$

# FIG. 7

Blade Crossing Determiner — LOS1, LOS2

(a) (b) (c) (d) (a) (c) (d) (a)(c)(d)

301

302

Blade Rotation Speed Calculator — Ncri, ωblade [rpm]

$$\frac{60d\theta}{\pi R(t2-t1)}$$

311

312

+20/(t3-t1)

313

314

315

316

310

+20/(t5-t3)

Coming Wind Velocity Calculator — Vwind

321  322  323  324

t1  t2  t3  t4  t5  t6  Time

Assist is Initiated because Coming Wind Velocity is not Zero and Blade Rotation Speed Satisfies Assist Initiation Specified Value

20

# FIG. 8

Assist is not Initiated because
Coming Wind Velocity
is Zero while
Blade Rotation Speed
Satisfies Assist
Initiation Specified Value

FIG. 9A

94

HDD

91

Processing
Circuit

FIG. 9B

94

HDD

92

Memory

93

CPU

22

## INTERNATIONAL SEARCH REPORT

| International application No. |
| --- |
| PCT/JP2016/056258 |

| A. CLASSIFICATION OF SUBJECT MATTER |
| --- |
| F03D7/04(2006.01)i |

According to International Patent Classification (IPC) or to both national classification and IPC

| B. FIELDS SEARCHED |
| --- |

Minimum documentation searched (classification system followed by classification symbols)
F03D7/04

Documentation searched other than minimum documentation to the extent that such documents are included in the fields searched

| Jitsuyo Shinan Koho | 1922–1996 | Jitsuyo Shinan Toroku Koho | 1996–2016 |
| --- | --- | --- | --- |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | JP 2012-21412 A  (Kyosan Electric Mfg. Co.,<br>Ltd.),<br>02 February 2012 (02.02.2012),<br>paragraphs [0034] to [0038]; fig. 1, 7<br>(Family: none) | 1-2<br>3 |
| Y<br>A | US 2014/0271181 A1  (PERLEY et al.),<br>18 September 2014 (18.09.2014),<br>paragraphs [0027], [0029]; fig. 1 to 3<br>& EP 2778395 A2 | 1-2<br>3 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 May 2016 (16.05.16) | 24 May 2016 (24.05.16) |

| Name and mailing address of the ISA/<br>Japan Patent Office<br>3-4-3,Kasumigaseki,Chiyoda-ku,<br>Tokyo 100-8915,Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004285991 A